# EUROPEAN PATENT APPLICATION

(11) **EP 4 807 980 A1**
(43) Date of publication of application: **16.09.2026**
(21) Application number: 23958321.4
(22) Date of filing: 10.11.2023
(51) Int. Cl.: H02P 9/30

(54) **ROTARY ELECTRIC MACHINE CONTROLLER**

(71) Applicant: Mitsubishi Electric Mobility Corporation, Tokyo 100-8310 (JP)
(72) Inventor: DAIKOKU, Takahiro, Tokyo 100-8310 (JP); FURUKAWA, Akira, Tokyo 100-8310 (JP); KAYAHARA, Ko, Tokyo 100-8310 (JP)
(74) Representative: Plasseraud IP
(86) International application number: PCT/JP2023/040519
(87) International publication number: WO 2025/099920

(57) **Abstract**

To provide a rotary electric machine controller capable of switching between the inverter generation and the alternator generation considering the efficiency of each generation mode by a simple determination method. A rotary electric machine controller determines whether the inverter generation mode or the alternator generation mode is to be executed, based on a present rotational speed and a present output command value, using a rotational speed-output curve for determination which is set based on a rotational speed-maximum output curve which is a curve where an absolute value of an output of the rotary electric machine becomes a maximum value at each rotational speed of the rotary electric machine in a case where the alternator generation mode is assumed to be executed.

## Description

### TECHNICAL FIELD

The present disclosure relates to a rotary electric machine controller.

### BACKGROUND ART

An efficiency difference due to different switching frequencies of the switching devices of the inverter exists between the inverter generation and the alternator generation. In the inverter generation, it is feasible to generate at low rotational speed by the step-up chopper control. But, since the switching control of the switching devices is performed by the PWM control, the switching frequency of the inverter generation is higher than that of the alternator generation which performs the synchronous rectification or the diode rectification, and the switching loss is generally larger at the same operating point. Then, the technology for switching a generation method according to the maximum output and the efficiency of the rotary electric machine has been proposed (for example, patent document 1).

In patent document 1, the generation method is switched by the first switch method for switching according to any one of the efficiencies of the inverter generation and the alternator generation, the torque ripple, and the noise, and the second switch method for switching to the generation method whose maximum output is larger when the difference between the maximum outputs is greater than or equal to a certain value. In the first switch method, by providing the hysteresis wide to the switching index, the switching frequency of the generation mode is suppressed, and operation is stabilized. By the second switch method, the switching to the generation mode whose maximum output is larger is realized. Further, the hysteresis of the maximum output is provided for the selection of these switch methods, and frequent switching of the switch methods is suppressed.

### CITATION LIST

### Patent Literature

Patent document 1: WO2018/193560

### SUMMARY OF INVENTION

### Technical Problem

In patent document 1, the generation mode whose efficiency is highest is selected by the first switch method. The efficiency varies according to the output of the rotary electric machine, the rotational speed, and the DC voltage. For example, a method for using a three-dimensional map which uses these as arguments and outputs the efficiency can be considered. But data amount becomes enormous depending on a step number of the map axes, and it becomes a factor to constrain the software capacity of the controller. A method for calculating the efficiency of two kinds of generation methods using equation and the like can be considered. But, since the processing load increases, components with higher performance are required.

Since a magnitude and a phase angle of flowing current are different between the inverter generation and the alternator generation, the current variation at the time of switching becomes comparatively large, and the output variation is caused. Accordingly, if the generation method is switched frequently, an interval when the desired current and output cannot be obtained increases, and there is a concern that the efficiency decreases.

Then, the purpose of the present disclosure is to provide a rotary electric machine controller capable of switching between the inverter generation and the alternator generation considering the efficiency of each generation mode by a simple determination method.

### Solution to Problem

A rotary electric machine controller according to the present disclosure that controls a rotary electric machine which is provided with an armature winding and a field winding via an inverter and a converter, the rotary electric machine controller including:
a generation switching determination unit that determines whether an inverter generation mode or an alternator generation mode is to be executed when the rotary electric machine is operated as a generator;
an inverter generation control unit that controls on/off of switching devices of the inverter, and applies AC voltage to the armature winding, and operates the rotary electric machine as a generator, when it is determined that the inverter generation mode is to be executed;
an alternator generation control unit that functions the inverter as a rectifier by an induced voltage generated in the armature winding by rotation of the rotary electric machine, and operates the rotary electric machine as a generator, when it is determined that the alternator generation mode is to be executed; and
a field voltage application unit that controls on/off of switching devices of the converter, and applies a voltage to the field winding,
wherein the generation switching determination unit determines whether the inverter generation mode or the alternator generation mode is to be executed, based on a present rotational speed and a present output command value, using a rotational speed-output curve for determination which is set based on a rotational speed-maximum output curve which is a curve where an absolute value of an output of the rotary electric machine becomes a maximum value at each rotational speed of the rotary electric machine in a case where the alternator generation mode is assumed to be executed.

### Advantage of Invention

A region where the efficiency of the alternator generation mode becomes higher than the efficiency of the inverter generation mode within an executable region of the alternator generation mode relates to the executable region of the alternator generation mode. According to the rotary electric machine controller of the present disclosure, the switching determination of the generation mode is performed using the rotational speed-output curve for determination which is set based on the rotational speed-maximum output curve of the alternator generation mode corresponding to the executable region of the alternator generation mode. Accordingly, by the determination using the rotational speed-output curve for determination, the switching determination considering the efficiency of each generation mode can be performed, and the determination processing can be simplified.

### BRIEF DESCRIPTION OF THE DRAWINGS

FIG. 1 is a schematic configuration diagram of the rotary electric machine, the inverter, and the controller according to Embodiment 1;
FIG. 2 is a schematic block diagram of the controller, according to Embodiment 1;
FIG. 3 is a hardware configuration diagram of the controller, according to Embodiment 1;
FIG. 4 is a figure for explaining the efficiency at the execution time of the inverter generation mode according to Embodiment 1;
FIG. 5 is a figure for explaining the efficiency at the execution time of the alternator generation mode according to Embodiment 1;
FIG. 6 is a figure for explaining the efficiency difference between the inverter generation mode and the alternator generation mode according to Embodiment 1;
FIG. 7 is a figure for explaining the first and second rotational speed-output curves for determination according to Embodiment 1;
FIG. 8 is a flowchart for explaining the generation switching determination processing according to Embodiment 1;
FIG. 9 is a figure for explaining a change in the rotational speed-maximum output curve of the alternator generation mode due to a change in the DC voltage according to Embodiment 1;
FIG. 10 is a figure for explaining the determination of the specific range of rotational speed according to Embodiment 1;
FIG. 11 is a schematic diagram for explaining the generator motor for vehicle according to Embodiment 1;
FIG. 12 is a figure for explaining the rotational speed-output curve for determination according to Embodiment 2;
FIG. 13 is a figure for explaining the rotational speed-output curve for determination according to Embodiment 2;
FIG. 14 is a flowchart for explaining the generation switching determination processing according to Embodiment 2; and
FIG. 15 is a flowchart for explaining the generation switching determination processing according to Embodiment 3.

### DETAILED DESCRIPTION OF THE EMBODIMENTS

### 1. Embodiment 1

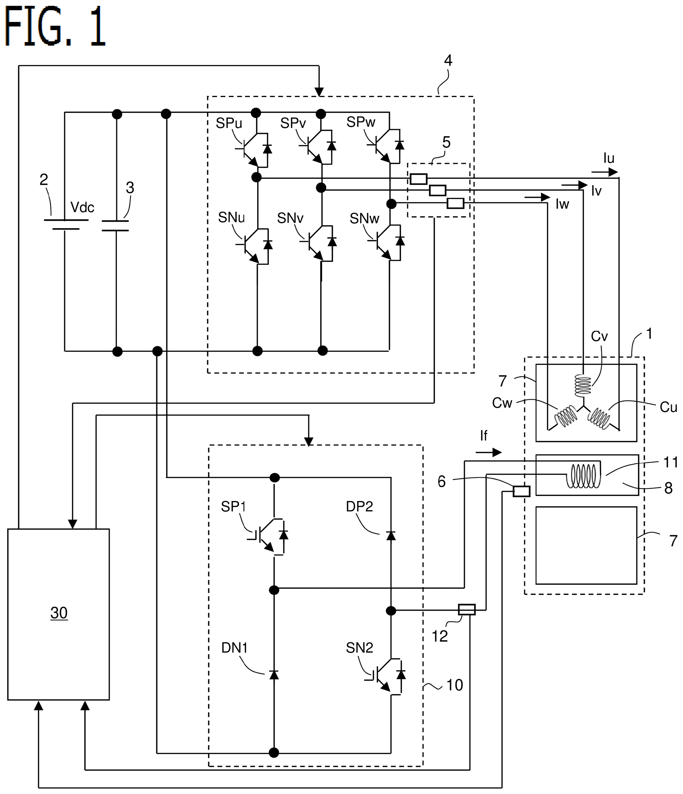

A rotary electric machine controller 30 (hereinafter, referred to simply as a controller 30) according to Embodiment 1 will be explained with reference to drawings. FIG. 1 is a schematic configuration diagram of a rotary electric machine 1, an inverter 4, a converter 10, and the controller 30 according to the present embodiment.

### 1-1. Rotary Electric Machine 1

The rotary electric machine 1 is provided with an armature winding and a field winding 11. The rotary electric machine 1 is provided with a stator 7 and a rotor 8 disposed on the radial-direction inner side of the stator 7. The stator 7 is provided with armature windings Cu, Cv, Cw of plural-phase (in this example, three-phase). The rotor 8 is provided with the field winding 11 for generating a magnetic flux in the rotor 8. The rotor 8 is provided with a permanent magnet together with the field winding 11. The permanent magnet may not be provided. The rotary electric machine 1 is a field winding type synchronous rotary electric machine.

The rotor 8 is provided with a rotation sensor 6 for detecting a rotational angle of the rotor 8. An output signal of the rotation sensor 6 is inputted into the controller 30. Various sensors, such as a Hall element, a resolver, or an encoder, are used for the rotation sensor 6. The rotation sensor 6 may be not provided, and the rotational angle (the magnetic pole position) may be estimated based on current information obtained by superimposing a harmonic wave component on the current command value describes below (so-called, sensorless system).

### 1-2. Inverter 4

The inverter 4 is provided with three sets of series circuits (leg) in each of which a high potential side switching device SP connected to the high potential side of the DC power source 2 and a low potential side switching device SN connected to the low high potential side of the DC power source 2 are connected in series, corresponding to each phase of three-phase. A connection node of two switching devices in the series circuit of each phase is connected to the armature winding of the corresponding phase. A smoothing capacitor 3 is connected between the high potential side and the low potential side of the DC power source 2.

IGBT (Insulated Gate Bipolar Transistor) in which a diode is connected in reversely parallel, MOSFET (Metal Oxide Semiconductor Field Effect Transistor), bipolar transistor in which a diode is connected in reversely parallel, or the like is used for the switching devices. A gate terminal of each switching device is connected to the controller 30 via a gate drive circuit and the like. The each switching device is turned on or turned off by the switching signal outputted from the controller 30.

The DC power source 2 outputs a power source voltage Vdc to the inverter 4 and the converter 10. The DC power source 2 may be any apparatus which outputs the DC voltage Vdc, such as a battery, a DC-DC converter, a diode rectifier, and a PWM rectifier. A voltage sensor for detecting the DC voltage Vdc may be provided.

An Armature current sensor 5 for detecting a current which flows into the armature winding of each phase is provided. The armature current sensor 5 is a current sensor, such as shunt resistance or Hall element. An output signal of the armature current sensor 5 is inputted into the controller 30.

In the present embodiment, the armature current sensor 5 is provided on an electric wire which connects between the series circuit of the switching devices of each phase, and the armature winding of each phase. A current detection signal of each phase of the armature current sensor 5 is inputted into the controller 30. The armature current sensor 5 may be connected in series to the series circuit of the switching devices of each phase. Alternatively, a current sensor may be provided on the wire which connects between the inverter 4 and the DC power source 2, and the current of the armature winding of each phase may be detected by well-known "bus line one-shunt system".

### 1-3. Converter 10

The converter 10 is provided with switching devices and performs power conversion between the DC power source 2 and the field winding 11. In the present embodiment, the converter 10 is provided with a first series circuit in which a high potential side switching device SP1 connected to the high potential side of the DC power source 2 and a low potential side diode DN1 connected to the low potential side of the DC power source 2 are connected in series, and a second series circuit in which a high potential side diode DP2 connected to the high potential side of the DC power source 2 and a low potential side switching device SN2 connected to the low potential side of the DC power source 2 are connected in series. A connection node between the high potential side switching device SP1 and the low potential side diode DN1 in the first series circuit is connected to one end of the field winding 11. A connection node between the high potential side diode DP2 and the low potential side switching device SN2 in the second series circuit is connected to the other end of the field winding 11. The each switching device is turned on or turned off by the switching signal outputted from the controller 30.

The converter 10 may be other configurations. For example, the low potential side switching diode DN1 of the first series circuit may be replaced to a switching device, and the high potential side switching diode DP2 of the second series circuit may be replaced to a switching device.

A field current sensor 12 is a current detection circuit for detecting a field current If which is current flowing through the field winding 11. In the present embodiment, the field current sensor 12 is provided on the electric wire which connects between the converter 10 and the field winding 11. The field current sensor 12 may be provided in other parts which can detect the field current If. An output signal of the field current sensor 12 is inputted into the controller 30. The field current sensor 12 is a current sensor, such as a Hall element, or a shunt resistance.

### 1-4. Controller 30

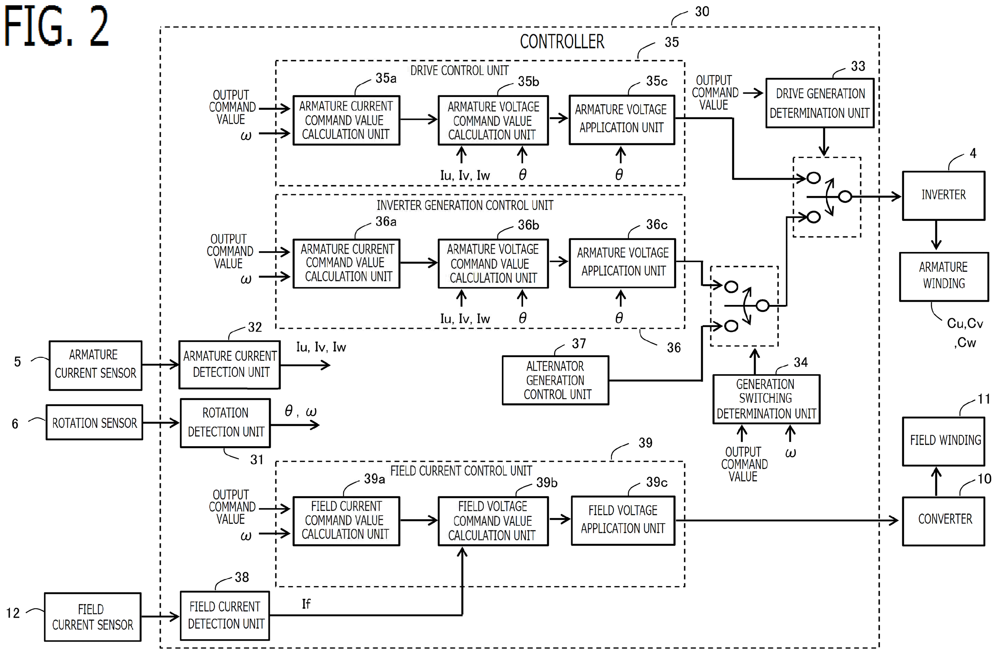

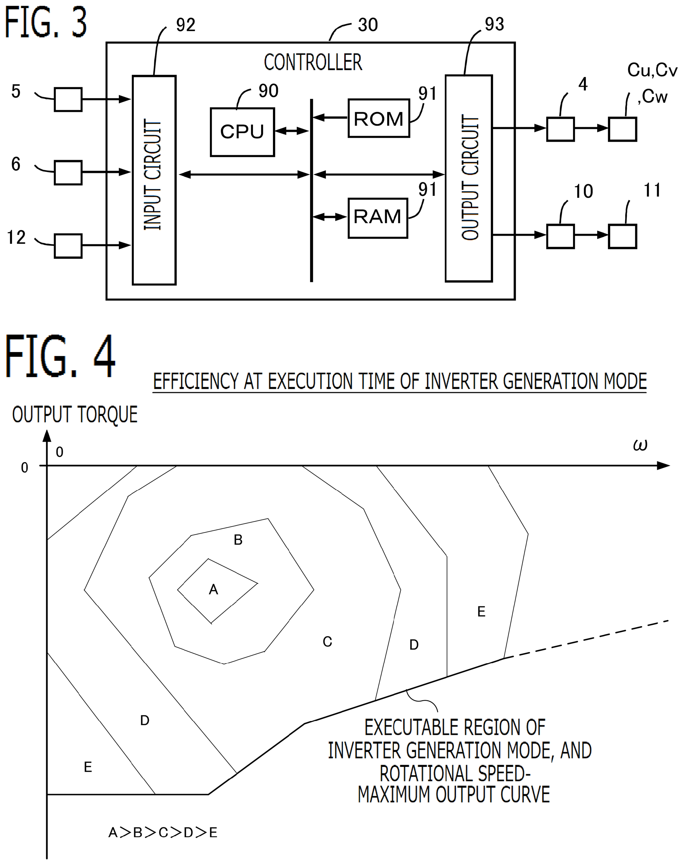

The controller 30 controls the rotary electric machine 1 via the inverter 4 and the converter 10. As shown in FIG. 2, the controller 30 is provided with a rotation detection unit 31, an armature current detection unit 32, a drive generation determination unit 33, a generation switching determination unit 34, a drive control unit 35, an inverter generation control unit 36, an alternator generation control unit 37, a field current detection unit 38, a field current control unit 39, and the like. Each function of the controller 30 is realized by processing circuits provided in the controller 30. Specifically, as shown in FIG. 3, the controller 30 is provided with, as a processing circuit, an arithmetic processor (computer) 90 such as a CPU (Central Processing Unit), storage apparatuses 91 that exchange data with the arithmetic processor 90, an input circuit 92 that inputs external signals to the arithmetic processor 90, an output circuit 93 that outputs signals from the arithmetic processor 90 to the outside, and the like.

As the arithmetic processor 90, ASIC (Application Specific Integrated Circuit), IC (Integrated Circuit), DSP (Digital Signal Processor), FPGA (Field Programmable Gate Array), various kinds of logical circuits, various kinds of signal processing circuits, and the like may be provided. As the arithmetic processor 90, a plurality of the same type ones or the different type ones may be provided, and each processing may be shared and executed. As the storage apparatuses 91, RAM (Random Access Memory) which can read data and write data from the arithmetic processor 90, ROM (Read Only Memory) which can read data from the arithmetic processor 90, and the like are provided. The input circuit 92 is connected with various kinds of sensors, such as the armature current sensor 5 and the rotation sensor 6, and is provided with an A/D converter and the like for inputting output signals of these sensors to the arithmetic processor 90. The output circuit 93 is connected with electric loads, such as a gate drive circuit which drive on/off of the switching devices, and is provided with a driving circuit and the like for outputting a control signal from the arithmetic processor 90.

Then, the arithmetic processor 90 runs software items (programs) stored in the storage apparatus 91 such as ROM and collaborates with other hardware devices in the controller 30, such as the storage apparatus 91, the input circuit 92, and the output circuit 93, so that the respective functions of the control units 31 to 39 provided in the controller 30 are realized. Setting data items such as the first and second rotational speed-output curves for determination to be utilized in the control units 31 to 39 are stored, as part of software items (programs), in the storage apparatus 91 such as ROM. Each function of the controller 30 will be described in detail below.

### 1-4-1. Rotation Detection Unit 31

The rotation detection unit 31 detects a rotational angle θ (a magnetic pole position θ of the rotor) and a rotational speed ω of the rotor in the electrical angle. In the present embodiment, the rotation detection unit 31 detects the rotational angle θ (the magnetic pole position θ) and the rotational speed ω in the electrical angle, based on the output signal of the rotation sensor 6.

The rotation detection unit 31 may estimate the rotational angle (the magnetic pole position) without using the rotation sensor, based on current information obtained by superimposing a harmonic wave component on the current command value (so-called, sensorless system).

### 1-4-2. Armature Current Detection Unit 32

The armature current detection unit 32 detects armature current detection values Iu, Iv, Iw of three-phase which flow into the three-phase armature windings, based on the output signal of the armature current sensor 5.

### 1-4-3. Field Current Detection Unit 38

The field current detection unit 38 detects the field current If flowing through the field winding 11, based on the output signal of the field current sensor 12.

### 1-4-4. Drive Generation Determination Unit 33

The drive generation determination unit 33 determines whether a drive mode and a generation mode is to be executed based on an output command value. "The drive mode" is a mode in which an electrical energy obtained from DC power source 2 is convert into a mechanical energy to rotate the rotary electric machine 1, and is a mode in which the rotary electric machine 1 is operated as a motor. "The generation mode" is a mode in which the mechanical energy of the rotary electric machine 1 is converted into the electrical energy to supply to the DC power source 2, and is a mode in which the rotary electric machine 1 is operated as a generator.

As the output command value, an output torque command value, an output current command value, or an output power command value may be used in accordance with the system in which the rotary electric machine 1 is used. For example, the output command value may be calculated inside the controller 30, and may be transmitted from the external controller.

The drive generation determination unit 33 determines that the drive mode is to be executed, when the output torque command value, the output current command value, or the output power command value is a positive value. The drive generation determination unit 33 determines that the generation mode is to be executed, when the output torque command value, the output current command value, or the output power command value is a negative value.

### 1-4-5. Drive Control Unit 35

When it is determined that the drive mode is to be executed, and the rotary electric machine 1 is operated as the motor, the drive control unit 35 controls on/off of the switching devices of the inverter 4, applies AC voltage to the armature winding, and operates the rotary electric machine 1 as the motor.

In the present embodiment, the drive control unit 35 is provided with an armature current command value calculation unit 35a, an armature voltage command value calculation unit 35b, and an armature voltage application unit 35c.

The armature current command value calculation unit 35a calculates an armature current command value based on the output command value. In addition to the output command value, the rotational speed ω, the DC voltage Vdc, and the like are also used. Well-known vector control is used, and current command values of d-axis and q-axis are calculated. The output torque command value, the output current command value, or the output power command value as the output command value is set to a positive value, and the rotary electric machine 1 operates as the motor.

The armature voltage command value calculation unit 35b performs a current feedback control which changes the armature voltage command value so that the armature current detection value approaches the armature current command value. The current feedback control is performed on a rotating coordinate system of d-axis and q-axis, the voltage command values of d-axis and q-axis are calculated, and the voltage command values of d-axis and q-axis are converted into armature voltage command values of three-phase based on the rotational angle θ.

The armature voltage application unit 35c controls on/off of the plurality of switching devices provided in inverter 4, based on the armature voltage command values of three-phase. Well-known the carrier comparison PWM control or the space vector PWM control is used for PWM control.

### 1-4-6. Generation Switching Determination Unit 34

When it is determined that the generation mode is to be executed and the rotary electric machine 1 is operated as the generator, the generation switching determination unit 34 determines whether an inverter generation mode or an alternator generation mode is to be executed. The details will be described later.

### 1-4-7. Inverter Generation Control Unit 36

When it is determined that the generation mode and the inverter generation mode are to be executed, the inverter generation control unit 36 executes an inverter generation control that controls on/off of the switching devices of the inverter 4, applies AC voltage to the armature winding, and operates the rotary electric machine 1 as the generator.

In the present embodiment, the inverter generation control unit 36 is configured similarly to the drive control unit 35, and the inverter generation control unit 36 is provided with an armature current command value calculation unit 36a, an armature voltage command value calculation unit 36b, and an armature voltage application unit 36c.

The armature current command value calculation unit 36a calculates an armature current command value based on the output command value. In the present embodiment, the armature current command value is calculated also based on the rotational speed ω, the DC voltage Vdc, and the like in addition to the output command value. Well-known vector control is used, and current command values of d-axis and q-axis are calculated. The output torque command value, the output current command value, or the output power command value as the output command value is set to a negative value, and the rotary electric machine 1 operates as the generator.

The armature voltage command value calculation unit 36b performs the current feedback control which changes the armature voltage command value so that the armature current detection value approaches the armature current command value. The current feedback control is performed on the rotating coordinate system of d-axis and q-axis, the voltage command values of d-axis and q-axis are calculated, and the voltage command values of d-axis and q-axis are converted into the armature voltage command values of three-phase based on the rotational angle θ.

The armature voltage application unit 36c controls on/off of the plurality of switching devices provided in inverter 4, based on the armature voltage command values of three-phase. Well-known the carrier comparison PWM control or the space vector PWM control is used for PWM control.

### 1-4-8. Alternator Generation Control Unit 37

When it is determined that the generation mode and the alternator generation mode are to be executed, the alternator generation control unit 37 executes an alternator generation control that functions the inverter 4 as a rectifier by an induced voltage generated in the armature winding by a rotation of the rotary electric machine 1, and operates the rotary electric machine 1 as a generator.
when the induced voltage of the armature windings of each phase generated by the rotation exceeds the high potential of the DC power source 2 or is less than the low potential of the DC power source 2, the diode of the high potential side switching device or the low potential side switching device of the corresponding phase is energized, and the inverter 4 operates as a full wave rectifying circuit. All the switching devices of the inverter 4 are turned off constantly. This rectification is called a diode rectification.

On the other hand, a synchronous rectification may be performed. That is, the alternator generation control unit 37 turns on the switching device of the diode, when a current flows through the diode by the induced voltage. Accordingly, since a current flows through the switching device instead of the diode, the power loss can be reduced and the heating amount can be reduced. For example, the alternator generation control unit 37 determines the diode of the high potential side switching device or the low potential side switching device of each phase through which a current is flowing, based on the armature current detection value of each phase; and turns on the switching device corresponding to the diode through which the current is flowing, and turns off the switching device corresponding to the diode through which the current is not flowing.

### 1-4-9. Field Current Control Unit 39

The field current control unit 39 controls on/off of the switching devices of the converter 10, and applies voltage to the field winding 11.

In the present embodiment, the field current control unit 39 is provided with a field current command value calculation unit 39a, a field voltage command value calculation unit 39b, and a field voltage application unit 39c.

The field current command value calculation unit 39a calculates a field current command value, based on the output command value, in each of the drive mode, the alternator generation mode, and the inverter generation mode. In the present embodiment, the field current command value is calculated also based on the rotational speed ω, the DC voltage Vdc, and the like, in addition to the output command value.

The field voltage command value calculation unit 39b performs a feedback control which changes the voltage command value of the field winding so that the field current detection value approaches the field current command value. The field voltage application unit 39c controls on/off of the plurality of switching devices of the converter 10 by PWM control, based on the voltage command value of the field winding.

### 1-4-10. Detailed Configuration of Generation Switching Determination Unit 34

### <Executable region and efficiency of each generation mode>

FIG. 4 shows an executable region of the inverter generation mode in a case where the inverter generation mode is assumed to be executed in the generation mode, and an efficiency of each region within the executable region. The horizontal axis is the rotational speed ω and the vertical axis is the output torque. A curve (a boundary line of the executable region) where the absolute value of the output torque becomes the maximum at each rotational speed is a rotational speed-maximum output curve which is a curve where the absolute value of the output of the rotary electric machine becomes the maximum value at each rotational speed. The generation efficiency is classified for each region specified by the rotational speed and the output torque. The regions A, B, C, D, E are in descending order of the generation efficiency. The generation efficiency decreases in order of the regions B, C, D, E, centering on the region A with the maximum efficiency.

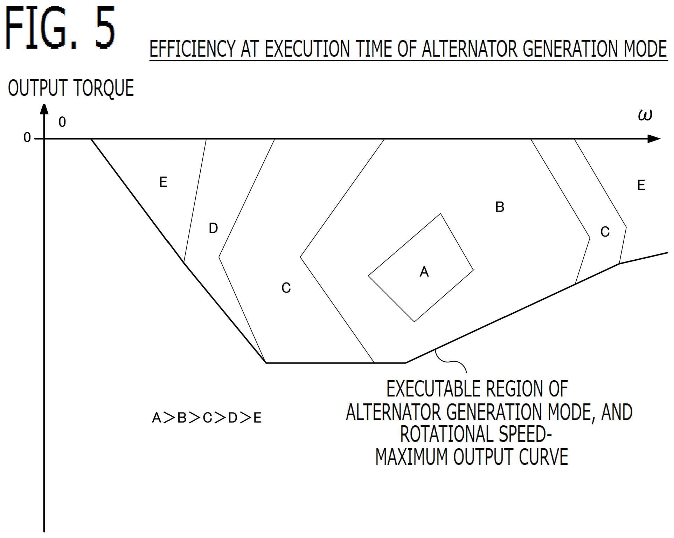

FIG. 5 shows an executable region of the alternator generation mode in a case where the alternator generation mode is assumed to be executed in the generation mode, and an efficiency of each region within the executable region. Similarly to FIG. 4, the horizontal axis is the rotational speed ω and the vertical axis is the output torque. A curve (a boundary line of the executable region) where the absolute value of the output torque becomes the maximum at each rotational speed is a rotational speed-maximum output curve which is a curve where the absolute value of the output of the rotary electric machine becomes the maximum value at each rotational speed. At low rotational speed, since the induced voltage generated in the armature winding is low and does not exceed the DC voltage Vdc, the alternator generation mode cannot be executed. In this range where the rotational speed is lower than the executable region of the alternator generation mode, the output of the rotational speed-maximum output curve is 0. Since the field current command value is increased as the absolute value of the output command value increases at each rotational speed, the output torque increases. The generation efficiency is classified for each region specified by the rotational speed and the output torque. The regions A, B, C, D, E are in descending order of the generation efficiency. The generation efficiency decreases in order of the regions B, C, D, E, centering on the region A with the maximum efficiency. As compared with the inverter generation mode of FIG. 4, the region A of the maximum efficiency is located on the high rotational speed side. And, the alternator generation mode cannot be executed in the region of low rotational speed.

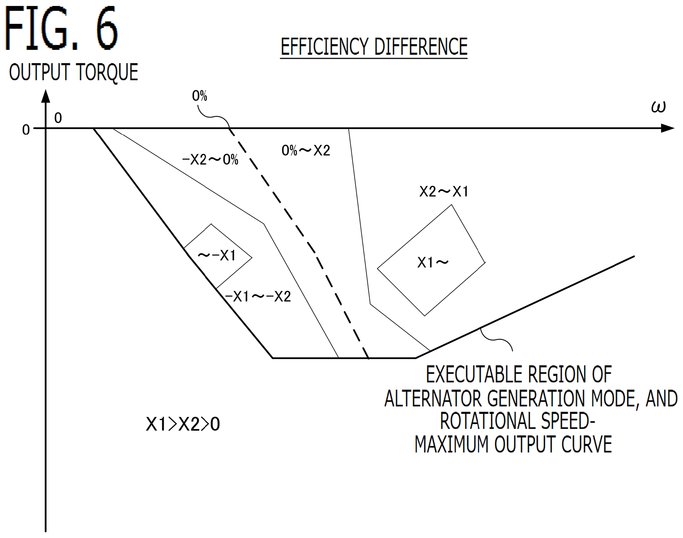

FIG. 6 shows an efficiency difference in the executable region of the alternator generation mode. The efficiency difference is obtained by subtracting the efficiency of the inverter generation mode from the efficiency of the alternator generation mode. If the efficiency difference is negative, the efficiency of the inverter generation mode is higher than the other, and if the efficiency difference is positive, the efficiency of the alternator generation mode is higher than the other. A line where the efficiency difference is 0% becomes a boundary line, the efficiency of the inverter generation mode is higher than the other on the low rotational speed side of the boundary line, and the efficiency of the alternator generation mode is higher than the other on the high rotational speed side of the boundary line. That is, even within the executable region of the alternator generation mode, the efficiency of the inverter generation mode is higher than the other on the low rotational speed side, and the efficiency of the inverter generation mode is higher than the other on the high rotational speed side. The boundary line where the efficiency difference is 0% relates to the executable region of the alternator generation mode. Accordingly, the switching determination of the generation mode for improving the generation efficiency may be performed considering the executable region of the alternator generation mode.

### <Switching based on rotational speed-maximum output curve of alternator generation mode>

Then, the generation switching determination unit 34 determines whether the inverter generation mode or the alternator generation mode is to be executed, using a rotational speed-output curve for determination which is set based on a rotational speed-maximum output curve which is a curve where the absolute value of the output of the rotary electric machine becomes the maximum value at each rotational speed of the rotary electric machine in a case where the alternator generation mode is assumed to be executed.

As mentioned above, within the executable region of the alternator generation mode, the efficiency of the inverter generation mode is higher than the other on the low rotational speed side, and the efficiency of the inverter generation mode is higher than the other on the high rotational speed side. The boundary line where the efficiency difference is 0% relates to the executable region of the alternator generation mode. According to the above configuration, the switching determination of the generation mode is performed using the rotational speed-output curve for determination which is set based on the rotational speed-maximum output curve of the alternator generation mode corresponding to the executable region of the alternator generation mode. Accordingly, by the determination using the rotational speed-output curve for determination, the switching determination considering the efficiency of each generation mode can be performed, and the determination processing can be simplified.

### <Determination using first and second rotational speed-output curves for determination>

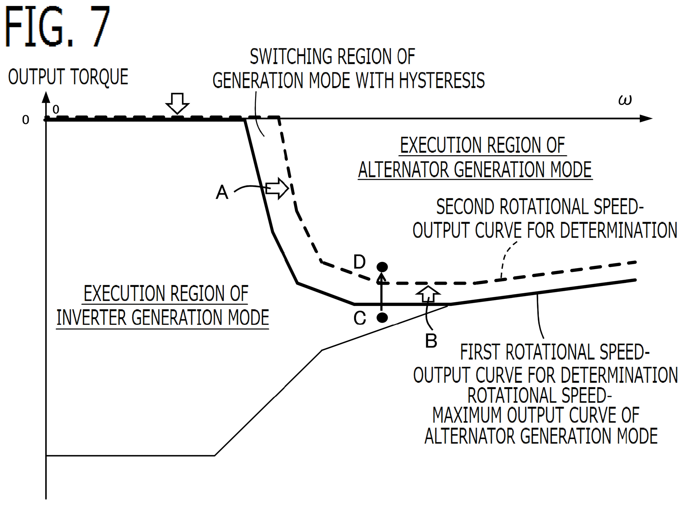

In the present embodiment, as shown in FIG. 7, as the rotational speed-output curve for determination, a first rotational speed-output curve for determination and a second rotational speed-output curve for determination which is deviated from the first rotational speed-output curve for determination in order to provide hysteresis in switching determination are used.

The generation switching determination unit 34 determines whether or not to switch from the alternator generation mode to the inverter generation mode, based on the present rotational speed and the present output command value, using the first rotational speed-output curve for determination, during execution of the alternator generation mode. On the other hand, the generation switching determination unit 34 determines whether or not to switch from the inverter generation mode to the alternator generation mode, based on the present rotational speed and the present output command value, using the second rotational speed-output curve for determination, during execution of the inverter generation mode.

According to this configuration, by using the first rotational speed-output curve for determination and the second rotational speed-output curve for determination which are deviated from each other in order to provide hysteresis in the switching determination, frequent switching of the generation mode due to variation of the rotational speed and variation of the output command value can be prevented, and output fluctuation and efficiency deterioration due to current variation can be suppressed.

In the present embodiment, a case where the output torque and the output torque command value are used as the output and the output command value will be explained. As the output and the output command value, the output current and the output current command value may be used, or the output power and the output power command value may be used. In either case, in the generation mode, each value is a negative value.

The output current Idc becomes positive when it flows into the inverter 4 and the converter 10 from the DC power source 2, and becomes negative when it flows into the DC power source 2 from the inverter 4 and the converter 10. The output power P becomes positive when it is supplied to the inverter 4 and the converter 10 from the DC power source 2, and becomes negative when it is supplied to the DC power source 2 from the inverter 4 and the converter 10.

The output torque T is given by the equation (1) using the d-axis current Id, the q-axis current Iq, and the d-axis magnetic flux φd and the q-axis magnetic flux φq. On the other hand, using the d-axis voltage Vd, the q-axis voltage Vq, the field voltage Vf, and the rotational speed ω of the rotary electric machine 1, the output current Idc is expressed by the equation (2), and the output power P is expressed by the equation (3). $\begin{matrix}T = {P}_{m} \left({I}_{q}{ϕ}_{d}-{I}_{d}{ϕ}_{q}\right) \\ {I}_{dc} = \frac{{I}_{d} {V}_{d} + {I}_{d} {V}_{q} + {I}_{f} {V}_{f}}{{V}_{dc}} = \frac{{R}_{a} \left({{I}_{d}}^{2}+{{I}_{q}}^{2}\right) + {I}_{f} {V}_{f} + ωT}{{V}_{dc}} \\ P = {R}_{a} \left({{I}_{d}}^{2}+{{I}_{q}}^{2}\right) + {I}_{f} {V}_{f} + ωT\end{matrix}$

### <Flowchart of determination processing>

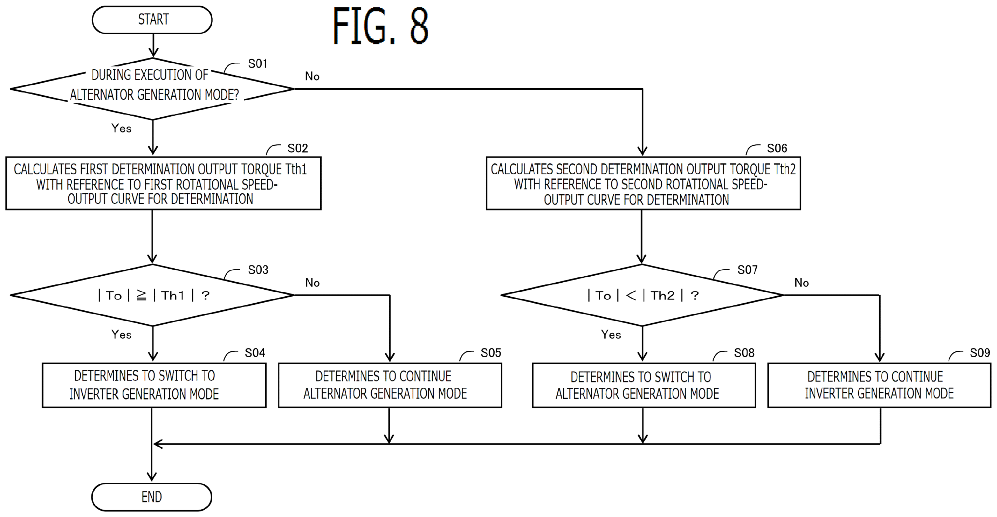

Detailed determination will be explained with reference to the flowchart of FIG. 8. The processing of FIG. 8 is executed at every predetermined calculation period. In the step S01, the generation switching determination unit 34 determines whether the alternator generation mode or the inverter generation mode is presently being executed. When the alternator generation mode is being executed, it advances to the step S02, and when the inverter generation mode is being executed, it advances to the step S06.

In the step S02, the generation switching determination unit 34 calculates the output torque corresponding to the present rotational speed as a first determination output torque Tth1 by referring to the first rotational speed-output curve for determination. Setting of the first rotational speed-output curve for determination is described below.

Then, in the step S03, the generation switching determination unit 34 determines whether or not the absolute value |To| of the present output torque command value is greater than or equal to the absolute value |Tth1| of the first determination output torque. When it is greater than or equal to the absolute value |Tth1| of the first determination output torque, it advances to the step S04, and when it is not greater than or equal to the absolute value |Tth1| of the first determination output torque, it advances to the step S05. In the step S04, the generation switching determination unit 34 determines to switch to the inverter generation mode. In the step S05, the generation switching determination unit 34 determines to continue the alternator generation mode, without switching to the inverter generation mode.

In the step S06, the generation switching determination unit 34 calculates the output torque corresponding to the present rotational speed as a second determination output torque Tth2 by referring to the second rotational speed-output curve for determination. Setting of the second rotational speed-output curve for determination is described below.

Then, in the step S07, the generation switching determination unit 34 determines whether or not the absolute value |To| of the present output torque command value is less than the absolute value |Tth2| of the second determination output torque. When it is less than the absolute value |Tth2| of the second determination output torque, it advances to the step S08, and when it is not less than the absolute value |Tth2| of the second determination output torque, it advances to the step S09. In the step S08, the generation switching determination unit 34 determines to switch to the alternator generation mode. In the step S09, the generation switching determination unit 34 determines to continue the inverter generation mode, without switching to the alternator generation mode.

### <First and second rotational speed-output curves for determination>

In the present embodiment, as shown in FIG. 7, the first rotational speed-output curve for determination is set corresponding to the rotational speed-maximum output curve of the alternator generation mode. In this example, the rotational speed-output curve for determination is set to become equivalent to the rotational speed-maximum output curve of the alternator generation mode.

According to this configuration, the inverter generation mode can be executed outside the executable region of the alternator generation mode.

### <Setting on high rotational speed side>

As shown in FIG. 7, the second rotational speed-output curve for determination is set on a side where the rotational speed is higher than the rotational speed-maximum output curve of the alternator generation mode. In details, a boundary line part on the low rotational speed side in a part where the absolute value of the output is larger than 0 in the second rotational speed-output curve for determination is set on the high rotational speed side than a boundary line part on the low rotational speed side in a part where the absolute value of the output is larger than 0 in the first rotational speed-output curve for determination.

According to this configuration, the first rotational speed-output curve for determination is set corresponding to the executable region of the alternator generation mode. As described above with reference to FIG. 6, even within the executable region of the alternator generation mode, the efficiency of the inverter generation mode is higher than the other on the low rotational speed side, and the efficiency of the alternator generation mode is higher than the other on the high rotational speed side. Accordingly, the boundary line where the efficiency difference becomes 0 is on the high rotational speed side than the boundary line on the low rotational speed side of the executable region of the alternator generation mode (the first rotational speed-output curve for determination). According to the above configuration, since the second rotational speed-output curve for determination is set on the side where the rotational speed is higher than the rotational speed-maximum output curve of the alternator generation mode, it is set corresponding to the boundary line where the efficiency difference becomes 0. The efficiency can be improved by executing the alternator generation mode on the high rotational speed side where the efficiency of the alternator generation mode becomes higher in the executable region of the alternator generation mode. The low rotational speed side where the efficiency of the inverter generation mode becomes higher in the executable region of the alternator generation mode becomes a switching region between the alternator generation mode and the inverter generation mode, and the inverter generation mode is executed half. Accordingly, while suppressing deterioration of efficiency, a hysteresis wide in the rotational speed direction can be provided, and determination can be stabilized. And, the inverter generation mode can be executed on the low rotational speed side than the executable region of the alternator generation mode, and the efficiency can be improved.

For example, the second rotational speed-output curve for determination may be set on a side where the rotational speed is higher than a region of the rotational speed and the output where the efficiency when the inverter generation mode is executed is higher than the efficiency when the alternator generation mode is executed shown in FIG. 6 (the boundary line where the efficiency difference is 0%).

### <Setting on low output absolute value side>

As shown in FIG. 7, the second rotational speed-output curve for determination is set on a side where the absolute value of the output becomes lower than the rotational speed-maximum output curve of the alternator generation mode. In details, a boundary line part on the low output absolute value side in a part where the absolute value of the output is larger than 0 in the second rotational speed-output curve for determination than 0 is set on side where the absolute value of the output is smaller than a boundary line part on the low output absolute value side in a part where the absolute value of the output is larger than 0 in the first rotational speed-output curve for determination.

According to this configuration, a hysteresis wide in the output direction can be provided, and the determination can be stabilized against output variation.

An output difference between the first rotational speed-output curve for determination and the second rotational speed-output curve for determination at each rotational speed is set larger than the output change caused by the maximum variation of the DC voltage Vdc supplied to the inverter 4 and the converter 10.

According to this configuration, even when the output changes due to the maximum variation of the DC voltage Vdc, the variation of the switching determination result can be suppressed.

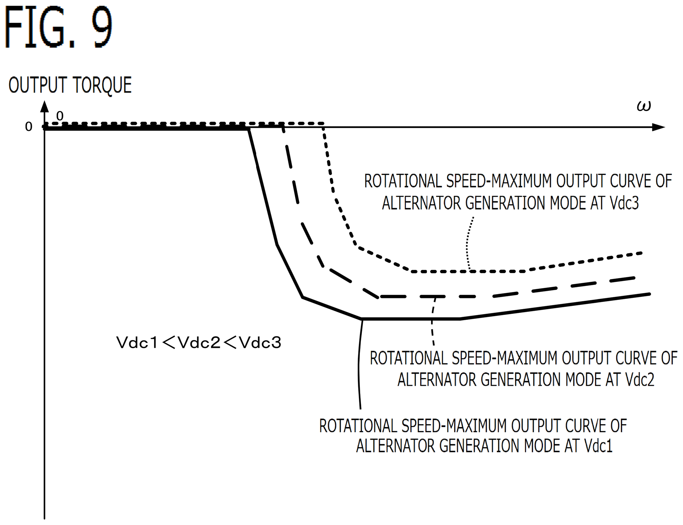

For example, the maximum variation in the DC voltage Vdc is a change in the DC voltage Vdc when changing from a non-generation state to a maximum generation state in a stepwise manner during execution of the alternator generation mode. As shown in FIG. 9 described below, as the DC voltage Vdc increases, the absolute value of the output in the alternator generation mode decreases. For example, as shown in FIG. 7, when the rotational speed and the output command value change from C point to D point, since the output command value becomes smaller than the second determination output torque Tth2, the inverter generation mode is switched to the alternator generation mode. When the DC voltage Vdc increases at this switching, and the absolute value of the first determination output torque Tth1 which is set according to the DC voltage Vdc is less than the absolute value of the output command value at D point, the alternator generation mode is immediately switched to the inverter generation mode. As described above, by setting the hysteresis wide in the output direction considering the maximum variation of the DC voltage Vdc, unnecessary switching of the generation mode can be prevented.

The output change due to the maximum variation of the DC voltage Vdc changes according to the rotational speed. Accordingly, the output difference (hysteresis wide in the output direction) between the first rotational speed-output curve for determination and the second rotational speed-output curve for determination may be changed according to the rotational speed. Alternatively, the output difference (the hysteresis wide in the output direction) between the first rotational speed-output curve for determination and the second rotational speed-output curve for determination may be set to a predetermined value. In this case, a predetermined value may be set considering the maximum value of the output change in the entire object range of the rotational speed.

### <Determination in specific range of rotational speed>

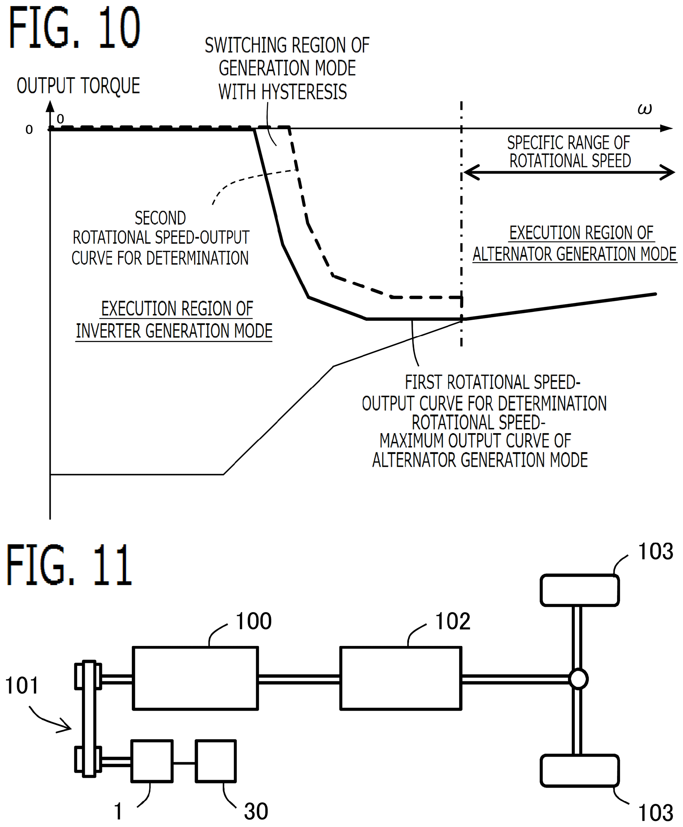

As shown in FIG. 10, when the present rotational speed is within a specific range of rotational speed which is set corresponding to a range of the rotational speed where the efficiency at the execution time of the alternator generation mode becomes higher than the efficiency at the execution time of the inverter generation mode, the generation switching determination unit 34 may determine that the alternator generation mode is to be executed, without performing the determination using the rotational speed-output curve for determination. That is, when the present rotational speed is within the specific range of rotational speed, the switching between the inverter generation mode and the alternator generation mode is not performed, but the alternator generation mode is always executed.

According to this configuration, by preferentially executing the alternator generation mode with high efficiency within the specific range of rotational speed, the unnecessary switching of the generation mode can be prevented, while improving the generation efficiency. The specific range of rotational speed is set on the high rotational speed side of the executable region of the alternator generation mode. If the rotational speed-maximum output curve of the alternator generation mode and the rotational speed-maximum output curve of the inverter generation mode generally overlap in the range of rotational speed where the efficiency of the alternator generation mode becomes high, it is not necessary to switch the generation mode as in the low rotational speed side of the rotational speed-maximum output curve of the alternator generation mode.

### <Setting according to DC voltage Vdc>

The generation switching determination unit 34 may change the first rotational speed-output curve for determination and the second rotational speed-output curve for determination according to the DC voltage Vdc. In this case, a voltage sensor for detecting the DC voltage Vdc may be provided.

As shown in FIG. 9, as the DC voltage Vdc increases, the DC voltage Vdc increases with respect to the induced voltage, and the rotational speed-maximum output curve of the alternator generation mode shifts to the high rotational speed side, and shifts to the decrease side of the absolute value of the output. Accordingly, by changing the first rotational speed-output curve for determination and the second rotational speed-output curve for determination corresponding to the rotational speed-maximum output curve and the like of the alternator generation mode which changes according to the DC voltage Vdc, the accuracy of the switching determination can be improved.

### <Setting of first and second rotational speed-output curves for determination>

The first and second rotational speed-output curves for determination are previously stored in the storage apparatus, such as ROM. The generation switching determination unit 34 reads and refers to the first and second rotational speed-output curves for determination from the storage apparatus. The first and second rotational speed-output curves for determination are preliminarily set as mentioned above.

If the first and second rotational speed-output curves for determination is changed according to the DC voltage Vdc, the first and second rotational speed-output curves for determination are previously stored in the storage apparatus for each step of a plurality of DC voltages. And, the generation switching determination unit 34 reads the first and second rotational speed-output curves for determination of two DC voltage steps close to the present DC voltage Vdc; calculates the first and second determination output torques Tth1, Tth2 corresponding to the present rotational speed and the present output command value, with reference to the first and second rotational speed-output curves for determination of each DC voltage step; and calculates the final first and second determination output torques Tth1, Tth2 by linearly interpolating between the first and second determination output torques Tth1, Tth2 of two DC voltage steps by the present DC voltage Vdc.

Alternatively, the first rotational speed-output curve for determination may be previously stored in the storage apparatus, such as ROM. And, the generation switching determination unit 34 may read the first rotational speed-output curve for determination from storage apparatus. Then, as shown in FIG. 7, the generation switching determination unit 34 may shift the first rotational speed-output curve for determination by a hysteresis wide A in the rotational speed direction (high rotational speed side) and by a hysteresis wide B in the output direction (decrease side of the absolute value of output) to set the second rotational speed-output curve for determination. Since the shift in the output direction (decrease side of the absolute value of output) causes an interval where the output of shifted curve exceeds 0, the generation switching determination unit 34 upper-limits the output of shifted curve by 0 to set the final second rotational speed-output curve for determination.

The hysteresis wide in the rotational speed direction and the hysteresis wide in the output direction are previously stored in the storage apparatus, such as ROM, and the generation switching determination unit 34 reads each hysteresis wide from the storage apparatus. If the hysteresis wide in the output direction is changed according to the rotational speed, map data in which a relation between the rotational speed and the hysteresis wide in the output direction is set is stored in the storage apparatus, and the generation switching determination unit 34 reads the map data from the storage apparatus, and calculates the hysteresis wide in the output direction corresponding to the present rotational speed.

If the first rotational speed-output curve for determination is changed according to the DC voltage Vdc, the first rotational speed-output curve for determination is previously stored in the storage apparatus for each step of a plurality of DC voltages. And, the generation switching determination unit 34 reads the first rotational speed-output curves for determination of the two DC voltage steps close to the present DC voltage Vdc; and calculates the final first rotational speed-output curve for determination by linearly interpolating between the first rotational speed-output curves for determination of the two DC voltage steps by the present DC voltage Vdc. For example, the output of each rotational speed of each of the first rotational speed-output curves for determination of the two DC voltage steps may be linearly interpolated by the present DC voltage Vdc.

### <Generator motor for vehicle>

The rotary electric machine 1 may be used for a generator motor for a vehicle. For example, as shown in FIG. 11, the rotation axis of the rotor of the rotary electric machine 1 is connected with a crankshaft of an internal combustion engine 100 via a pulley and belt mechanism 101. The rotation axis of the rotary electric machine 1 is connected with wheels 103 via the internal combustion engine 100 and a transmission 102.

The rotary electric machine 1 functions as a cranking motor and a torque assist motor at the time of the starting of the internal combustion engine 100 and at the time of the torque assist for assisting the output of the internal combustion engine 100; and functions also as a charging generator which charges the DC power source 2 after the starting of the internal combustion engine. According to the controller 30 of the present embodiment, since the efficiency of regenerative generation at the time of idling and braking can be improved, the charge amount of the DC power source 2 can be increased, and the frequency at which it can be operated as the torque assist motor can be increased. If the vehicle is an idling stop vehicle, the idling stop frequency can be increased, and it leads to the improvement in fuel efficiency of vehicle.

The rotary electric machine 1 may be used as a power source for various kinds of apparatus other than the generator motor for vehicle.

### 2. Embodiment 2

Next, the rotary electric machine 1 and the controller 30 according to Embodiment 2 will be explained. The explanation for constituent parts the same as those in Embodiment 1 will be omitted. The basic configuration of the rotary electric machine 1 and the controller 30 according to the present embodiment is the same as that of Embodiment 1. Embodiment 2 is different from Embodiment 1 in the processing of the generation switching determination unit 34.

In Embodiment 1, the first and second rotational speed-output curves for determination are set as the rotational speed-output curve for determination. But, in the present embodiment, one rotational speed-output curve for determination is set.

In the present embodiment, when a state where a switching condition which uses the rotational speed-output curve for determination which is set based on the rotational speed-maximum output curve of the alternator generation mode is established continues for a determination period, the generation switching determination unit 34 actually switches between the execution determination of the inverter generation mode, and the execution determination of the alternator generation mode.

According to this configuration, since switching is actually performed when the state where the switching condition using the rotational speed-output curve for determination is established continues for the determination period, frequent switching of the generation mode due to variation of the rotational speed and variation of the output command value can be prevented, and output fluctuation and due to current variation can be suppressed.

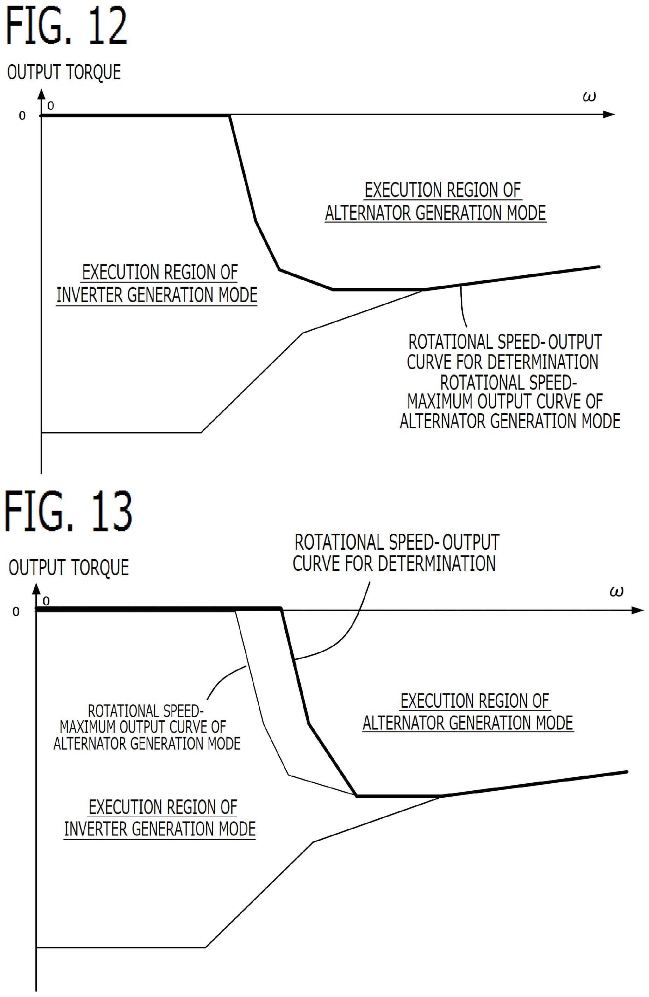

In the present embodiment, as shown in FIG. 12, the rotational speed-output curve for determination is set corresponding to the rotational speed-maximum output curve of the alternator generation mode. In this example, the rotational speed-output curve for determination is set to become equivalent to the rotational speed-maximum output curve of the alternator generation mode.

Alternatively, as shown in FIG. 13, the rotational speed-output curve for determination may be set corresponding to a region where the efficiency of the alternator generation mode is higher than the efficiency of the inverter generation mode, within a range of the rotational speed-maximum output curve of the alternator generation mode.

Similar to Embodiment 1, the rotational speed-output curve for determination is previously stored in the storage apparatus, such as ROM, and the generation switching determination unit 34 reads and refers to the rotational speed-output curve for determination from the storage apparatus. Similar to Embodiment 1, if the rotational speed-output curve for determination is changed according to the DC voltage Vdc, the rotational speed-output curve for determination is previously stored in the storage apparatus for each step of a plurality of DC voltages. The generation switching determination unit 34 reads the rotational speed-output curves for determination of the two DC voltage steps close to the present DC voltage Vdc; calculates the determination output torque Tth corresponding to the present rotational speed and the present output command value, with reference to the rotational speed-output curve for determination of each DC voltage step; and calculates the final determination output torque Tth by linearly interpolating between the determination output torques Tth of two DC voltage steps by the present DC voltage Vdc.

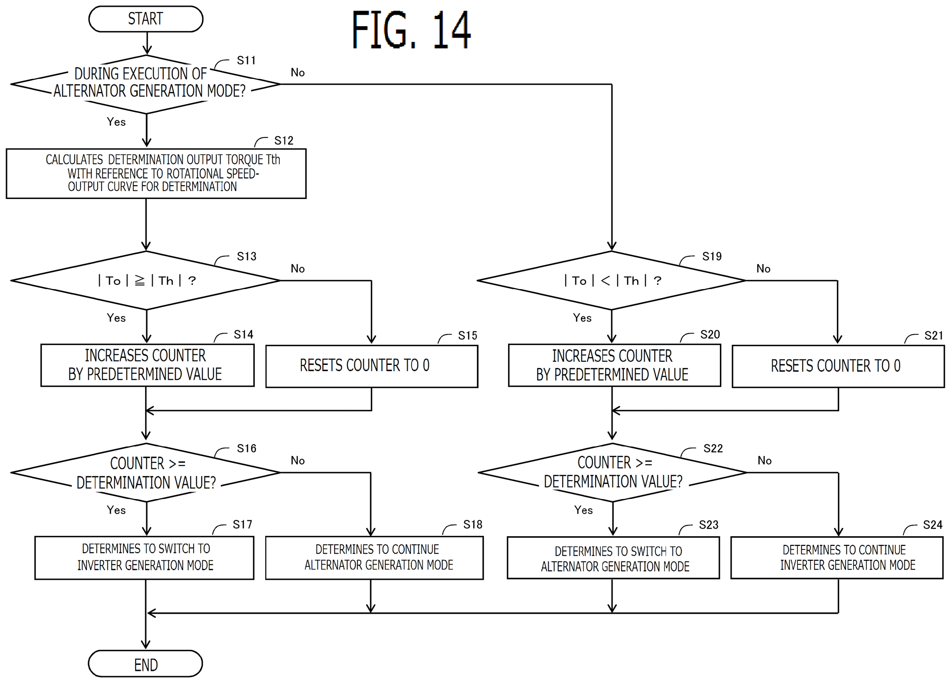

Detailed determination will be explained with reference to the flowchart of FIG. 14. The processing of FIG. 14 is executed at every predetermined calculation period. In the step S11, the generation switching determination unit 34 determines whether the alternator generation mode or the inverter generation mode is presently being executed. When the alternator generation mode is being executed, it advances to the step S12, and when the inverter generation mode is being executed, it advances to the step S19.

In the step S12, the generation switching determination unit 34 calculates the output torque corresponding to the present rotational speed as the determination output torque Tth by referring to the rotational speed-output curve for determination.

Then, in the step S13, the generation switching determination unit 34 determines whether or not the absolute value |To| of the present output torque command value is greater than or equal to the absolute value |Tth| of the determination output torque. When it is greater than or equal to the absolute value |Tth| of the determination output torque, it advances to the step S14, and when it is not greater than or equal to the absolute value |Tth| of the determination output torque, it advances to the step S15. In the step S14, the generation switching determination unit 34 increases a switching counter to the inverter generation mode by a predetermined value. In the step S15, the generation switching determination unit 34 resets the switching counter to the inverter generation mode to 0. In the step S16, the generation switching determination unit 34 determines whether or not the switching counter to the inverter generation mode is greater than or equal to a determination value corresponding to a determination period. When it is greater than or equal to the determination value, it advances to the step S17, and when it is less than determination value, it advances to the step S18. In the step S17, the generation switching determination unit 34 determines to switch to the inverter generation mode. In the step S18, the generation switching determination unit 34 determines to continue the alternator generation mode, without switching to the inverter generation mode.

On the other hand, in the step S19, the generation switching determination unit 34 determines whether or not the absolute value |To| of the present output torque command value is less than the absolute value |Tth| of the determination output torque. When it is less than the absolute value |Tth| of the determination output torque, it advances to the step S20, and when it is not less than the absolute value |Tth| of the determination output torque, it advances to the step S21. In the step S20, the generation switching determination unit 34 increases a switching counter to the alternator generation mode by a predetermined value. In the step S21, the generation switching determination unit 34 resets the switching counter to the alternator generation mode to 0. In the step S22, the generation switching determination unit 34 determines whether or not the switching counter to the alternator generation mode is greater than or equal to a determination value corresponding to a determination period. When it is greater than or equal to the determination value, it advances to the step S23, and when it is less than the determination value, it advances to the step S24. In the step S23, the generation switching determination unit 34 determines to switch to the alternator generation mode. In the step S24, the generation switching determination unit 34 determines to continue the inverter generation mode, without switching to the alternator generation mode.

Similar to Embodiment 1, when the present rotational speed is within a specific range of the rotational speed which is set corresponding to a range of the rotational speed where the efficiency at the execution time of the alternator generation mode becomes higher than the efficiency at the execution time of the inverter generation mode, the generation switching determination unit 34 may determine that the alternator generation mode is to be executed.

### 3. Embodiment 3

Next, the rotary electric machine 1 and the controller 30 according to Embodiment 3 will be explained. The explanation for constituent parts the same as those in Embodiment 1 will be omitted. The basic configuration of the rotary electric machine 1 and the controller 30 according to the present embodiment is the same as that of Embodiment 1. Embodiment 3 is different from Embodiment 1 in the processing of the generation switching determination unit 34.

In Embodiment 1, the first and second rotational speed-output curves for determination are set as the rotational speed-output curve for determination. But, in the present embodiment, one rotational speed-output curve for determination is set.

In the present embodiment, in a state where a switching condition from the inverter generation mode to the alternator generation mode using the rotational speed-output curve for determination which is set based on the rotational speed-maximum output curve of the alternator generation mode is established, when a change rate in the rotational speed and a change rate in the output command value to a switching direction from the inverter generation mode to the alternator generation mode becomes greater than or equal to a determination value, the generation switching determination unit 34 actually switches from the inverter generation mode to the alternator generation mode.

According to this configuration, in the state where the switching condition from the inverter generation mode to the alternator generation mode using the rotational speed-output curve for determination is established, when the change rate in the rotational speed and the change rate in the output command value to the switching direction becomes greater than or equal to the determination value, the switching is actually performed. Therefore, the switching to the alternator generation mode is immediately executed when a possibility that the rotational speed and the output command value switching changes to the opposite switching direction is small, and it can be determined that a possibility that the switching condition will not be established is small, and efficiency can be improved by execution of the alternator generation mode.

In the present embodiment, the determination of Embodiment 2 is further combined. That is, when a state where a switching condition from the alternator generation mode to the inverter generation mode using the rotational speed-output curve for determination is established continues for a determination period, the generation switching determination unit 34 actually switches from the alternator generation mode to the inverter generation mode. When a state where a switching condition from the inverter generation mode to the alternator generation mode using the rotational speed-output curve for determination is established continues for a determination period, or when a change rate in the rotational speed and a change rate in the output command value to the switching direction from the inverter generation mode to the alternator generation mode become greater than or equal to a determination value in a state where a switching condition from the inverter generation mode to the alternator generation mode using the rotational speed-output curve for determination is established, the generation switching determination unit 34 actually switches from the inverter generation mode to the alternator generation mode.

According to this configuration, while preventing frequent switching of the generation mode due to variation of the rotational speed and variation of the output command value, by actually switching when the state where the switching condition is established continues for the determination period, the switching to the alternator generation mode is immediately executed when it can be determined by respective change rates that a possibility that the rotational speed and the output command value change to the opposite switching direction is small, and efficiency can be improved by execution of the alternator generation mode.

In the present embodiment, as shown in FIG. 12, the rotational speed-output curve for determination is set corresponding to the rotational speed-maximum output curve of the alternator generation mode. In this example, the rotational speed-output curve for determination is set to become equivalent to the rotational speed-maximum output curve of the alternator generation mode.

Alternatively, as shown in FIG. 13, the rotational speed-output curve for determination may be set corresponding to a region where the efficiency of the alternator generation mode is higher than the efficiency of the inverter generation mode, within a range of the rotational speed-maximum output curve of the alternator generation mode.

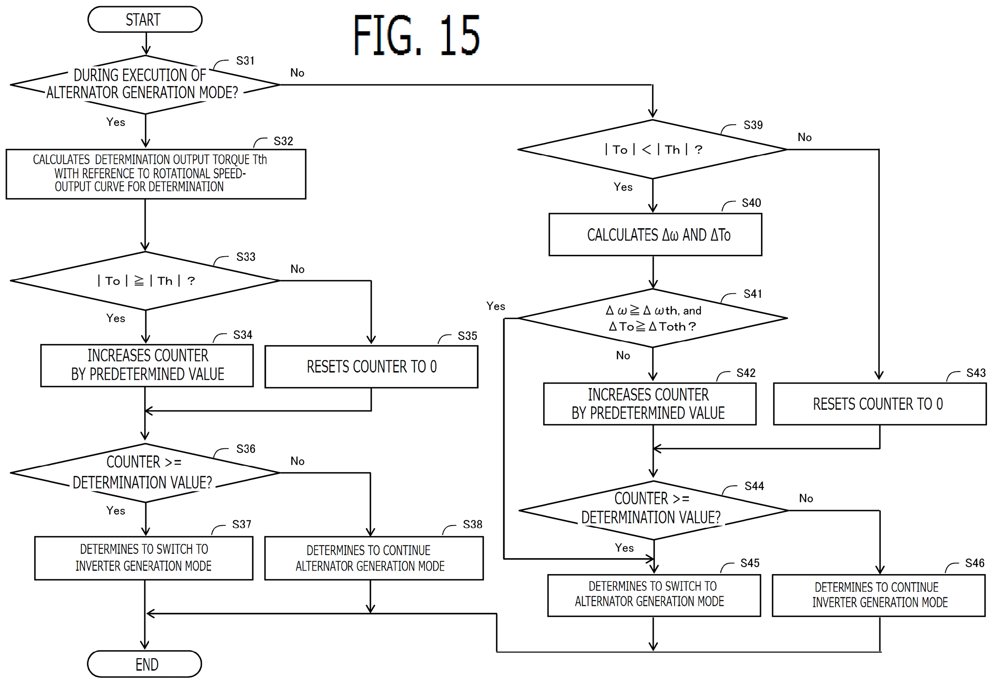

Detailed determination will be explained with reference to the flowchart of FIG. 15. The processing of FIG. 15 is executed at every predetermined calculation period. In the step S31, the generation switching determination unit 34 determines whether the alternator generation mode or the inverter generation mode is presently being executed. When the alternator generation mode is being executed, it advances to the step S32, and when the inverter generation mode is being executed, it advances to the step S39.

In the step S32, the generation switching determination unit 34 calculates the output torque corresponding to the present rotational speed as the determination output torque Tth by referring to the rotational speed-output curve for determination.

Then, in the step S33, the generation switching determination unit 34 determines whether or not the absolute value |To| of the present output torque command value is greater than or equal to the absolute value |Tth| of the determination output torque. When it is greater than or equal to the absolute value |Tth| of the determination output torque, it advances to the step S34, and when it is not greater than or equal to the absolute value |Tth| of the determination output torque, it advances to the step S35. In the step S34, the generation switching determination unit 34 increases a switching counter to the inverter generation mode by a predetermined value. In the step S35, the generation switching determination unit 34 resets the switching counter to the inverter generation mode to 0. In the step S36, the generation switching determination unit 34 determines whether or not the switching counter to the inverter generation mode is greater than or equal to a determination value corresponding to a determination period. When it is greater than or equal to the determination value, it advances to the step S37, and when it is less than determination value, it advances to the step S38. In the step S37, the generation switching determination unit 34 determines to switch to the inverter generation mode. In the step S38, the generation switching determination unit 34 determines to continue the alternator generation mode, without switching to the inverter generation mode.

On the other hand, in the step S39, the generation switching determination unit 34 determines whether or not the absolute value |To| of the present output torque command value is less than the absolute value |Tth| of the determination output torque. When it is less than the absolute value |Tth| of the determination output torque, it advances to the step S40, and when it is not less than the absolute value |Tth| of the determination output torque, it advances to the step S43.

In the step S40, the generation switching determination unit 34 calculates the change rate Δω of the rotational speed by subtracting the rotational speed before a change rate operation period from the present rotational speed; and calculates the change rate ΔTo of the output command value by subtracting the present output command value from the output command value before the change rate operation period. In the step S41, the generation switching determination unit 34 determines whether or not the change rate Δω of the rotational speed is greater than or equal to a determination value Δωth of the rotational speed, and the change rate ΔTo of the output command value is greater than or equal to a determination value ΔToth of the output command value. When it is greater than or equal to the determination value Δωth of the rotational speed and is greater than or equal to the determination value ΔToth of the output command value, it advances to the step S45, and otherwise, it advances to the step S42.

In the step S42, the generation switching determination unit 34 increases a switching counter to the alternator generation mode by a predetermined value. In the step S43, the generation switching determination unit 34 resets the switching counter to the alternator generation mode to 0.

In the step S44, the generation switching determination unit 34 determines whether or not the switching counter to the alternator generation mode is greater than or equal to a determination value corresponding to a determination period. When it is greater than or equal to the determination value, it advances to the step S45, and when it is less than determination value, it advances to the step S46. In the step S45, the generation switching determination unit 34 determines to switch to the alternator generation mode. In the step S46, the generation switching determination unit 34 determines to continue the inverter generation mode, without switching to the alternator generation mode.

Similar to Embodiment 1, when the present rotational speed is within a specific range of the rotational speed which is set corresponding to a range of the rotational speed where the efficiency at the execution time of the alternator generation mode becomes higher than the efficiency at the execution time of the inverter generation mode, the generation switching determination unit 34 may determine that the alternator generation mode is to be executed.

### <Other embodiments>

(1) In each of the above-mentioned Embodiments, there was explained the case where the three-phase armature winding is provided. However, as long as the phase number of armature winding is plural-phase, it may be set to any number, such as two-phase or four-phase.
(2) In each of the above-mentioned embodiments, there has been explained the case where one set of three-phase armature winding and inverter are provided. However, two or more sets of the plural-phase armature windings and the inverters may be provided. For each set, it may be configured in the same manner as in the above embodiments.

Although the present disclosure is described above in terms of various exemplary embodiments and implementations, it should be understood that the various features, aspects and functionality described in one or more of the individual embodiments are not limited in their applicability to the particular embodiment with which they are described, but instead can be applied, alone or in various combinations to one or more of the embodiments. It is therefore understood that numerous modifications which have not been exemplified can be devised without departing from the scope of the present disclosure. For example, at least one of the constituent components may be modified, added, or eliminated. At least one of the constituent components mentioned in at least one of the preferred embodiments may be selected and combined with the constituent components mentioned in another preferred embodiment.

### REFERENCE SIGNS LIST

1: Rotary Electric Machine, 2: DC Power Source, Vdc: DC voltage, 4: Inverter, 10: Converter, 11: Field Winding, 30: Rotary Electric Machine Controller, 34: Generation Switching Determination Unit, 36: Inverter Generation Control Unit, 37: Alternator Generation Control Unit

## Claims

1. A rotary electric machine controller that controls a rotary electric machine which is provided with an armature winding and a field winding via an inverter and a converter, the rotary electric machine controller comprising:
a generation switching determination unit that determines whether an inverter generation mode or an alternator generation mode is to be executed when the rotary electric machine is operated as a generator;
an inverter generation control unit that controls on/off of switching devices of the inverter, and applies AC voltage to the armature winding, and operates the rotary electric machine as a generator, when it is determined that the inverter generation mode is to be executed;
an alternator generation control unit that functions the inverter as a rectifier by an induced voltage generated in the armature winding by rotation of the rotary electric machine, and operates the rotary electric machine as a generator, when it is determined that the alternator generation mode is to be executed; and
a field voltage application unit that controls on/off of switching devices of the converter, and applies a voltage to the field winding,
wherein the generation switching determination unit determines whether the inverter generation mode or the alternator generation mode is to be executed, based on a present rotational speed and a present output command value, using a rotational speed-output curve for determination which is set based on a rotational speed-maximum output curve which is a curve where an absolute value of an output of the rotary electric machine becomes a maximum value at each rotational speed of the rotary electric machine in a case where the alternator generation mode is assumed to be executed.

2. The rotary electric machine controller according to claim 1,
wherein the generation switching determination unit determines whether or not to switch from the alternator generation mode to the inverter generation mode, based on the present rotational speed and the present output command value, using a first rotational speed-output curve for determination, during execution of the alternator generation mode; and
determines whether or not to switch from the inverter generation mode to the alternator generation mode, based on the present rotational speed and the present output command value, using a second rotational speed-output curve for determination which is deviated from the first rotational speed-output curve for determination in order to provide hysteresis in switching determination, during execution of the inverter generation mode.

3. The rotary electric machine controller according to claim 2,
wherein the second rotational speed-output curve for determination is set on a side where the rotational speed is higher than the first rotational speed-output curve for determination.

4. The rotary electric machine controller according to claim 3,
wherein the second rotational speed-output curve for determination is set on a higher side of the rotational speed with respect to a region of rotational speed and output where an efficiency at an execution time of the inverter generation mode becomes higher than an efficiency at an execution time of the alternator generation mode.

5. The rotary electric machine controller according to any one of claims 2 to 4,
wherein the first rotational speed-output curve for determination is set corresponding to the rotational speed-maximum output curve of the alternator generation mode.

6. The rotary electric machine controller according to any one of claims 2 to 5,
wherein the second rotational speed-output curve for determination is set on a side where an absolute value of output becomes lower than the first rotational speed-output curve for determination.

7. The rotary electric machine controller according to claim 6,
wherein an output difference between the first rotational speed-output curve for determination and the second rotational speed-output curve for determination at each rotational speed is set larger than an output change caused by a maximum variation of a DC voltage supplied to the inverter and the converter.

8. The rotary electric machine controller according to claim 7,
wherein a maximum variation in the DC voltage is a change in the DC voltage when changing from a non-generation state to a maximum generation state in a stepwise manner during execution of the alternator generation mode.

9. The rotary electric machine controller according to any one of claims 2 to 8,
wherein the generation switching determination unit changes the first rotational speed-output curve for determination and the second rotational speed-output curve for determination according to the DC voltage supplied to the inverter and the converter.

10. The rotary electric machine controller according to claim 1,
wherein the generation switching determination unit actually switches between an execution determination of the inverter generation mode and an execution determination of the alternator generation mode, when a state where a switching condition which uses the rotational speed-output curve for determination is established continues for a determination period.

11. The rotary electric machine controller according to claim 1 or 10,
wherein, in a state where a switching condition from the inverter generation mode to the alternator generation mode using the rotational speed-output curve for determination is established, when a change rate in the rotational speed and a change rate in the output command value to a switching direction from the inverter generation mode to the alternator generation mode become greater than or equal to a determination value, the generation switching determination unit actually switches from the inverter generation mode to the alternator generation mode.

12. The rotary electric machine controller according to any one of claims 1 to 11,
wherein the generation switching determination unit determines that the alternator generation mode is to be executed, when the present rotational speed is within a specific range of the rotational speed which is set corresponding to a range of the rotational speed where an efficiency at an execution time of the alternator generation mode becomes higher than an efficiency at an execution time of the inverter generation mode.

13. The rotary electric machine controller according to any one of claims 1 to 12,
wherein the alternator generation control unit executes a synchronous rectification generation.

14. The rotary electric machine controller according to any one of claims 1 to 13,
wherein the output is an output torque of the rotary electric machine.

15. The rotary electric machine controller according to any one of claims 1 to 13,
wherein the output is an output current which flows between a DC power source, and the inverter and the converter.

16. The rotary electric machine controller according to any one of claims 1 to 15,
wherein the rotary electric machine is a generator motor for a vehicle.
